# EUROPEAN PATENT APPLICATION

(11) **EP 3 499 110 A1**
(43) Date of publication of application: **19.06.2019**
(21) Application number: 17839481.3
(22) Date of filing: 08.08.2017
(51) Int. Cl.: F21S 41/00

(54) **VEHICLE LIGHTING FIXTURE**

(30) Priority: 08.08.2016 JP 2016155540
(71) Applicant: Ichikoh Industries, Ltd., Isehara-shi, Kanagawa 259-1192 (JP)
(72) Inventor: OKUBO, Yasuhiro, Isehara-shi Kanagawa 259-1192 (JP)
(74) Representative: Grünecker Patent- und Rechtsanwälte PartG mbB
(86) International application number: PCT/JP2017/028787
(87) International publication number: WO 2018/030411

(57) **Abstract**

A vehicle light fixture comprises a light source unit and a lens. The light source unit comprises: a substrate; a first light-emitting chip array having first light-emitting chips arranged in a horizontal direction on the substrate; a second chip array having second light-emitting chips arranged in a horizontal direction on the substrate; and a third light-emitting chip array having third light-emitting chips arranged in a horizontal direction on the substrate. The second light-emitting chip array is positioned beneath the first light-emitting chip array in the plumb-bob vertical direction, and separated by a first distance. The third light-emitting chip array is positioned beneath the second light-emitting chip array in the plumb-bob vertical direction, and separated by a second distance. The first distance is longer than the second distance.

## Description

### TECHNICAL FIELD

The present invention relates to a vehicular lamp.

### BACKGROUND

Patent Literature 1 discloses a vehicular front light capable of controlling an adaptive driving beam that varies a driving-beam light distribution pattern, to suppress glare light emitted to a leading vehicle.

### CITATION LIST

### PATENT LITERATURE

Patent Literature 1: Japanese Unexamined Patent Application Publication No. 2013-20709

### SUMMARY OF THE INVENTION

### PROBLEMS TO BE SOLVED BY THE INVENTION

However, recently, there has been a need for further enhancement in the controllability and functions of the driving-beam light distribution pattern.

An object of the present invention, which has been conceived in light of the above-described circumstances, is to provide a vehicular lamp having functionalities more enhanced than those of the related art.

### MEANS FOR SOLVING THE PROBLEM

In order to achieve the above object, the present invention is realized by the following constitution.
(1) A vehicular lamp according to the present invention comprising: a light source unit; and a lens disposed in front of the light source unit, wherein, the light source unit comprises: a substrate; a first light-emitting chip array comprising a plurality of semiconductor-type first light-emitting chips disposed on the substrate and arrayed along a horizontal direction; a second light-emitting chip array comprising a plurality of semiconductor-type second light-emitting chips disposed on the substrate and arrayed along the horizontal direction; and a third light-emitting chip array comprising a plurality of semiconductor-type third light-emitting chips disposed on the substrate and arrayed along the horizontal direction, the second light-emitting chip array is disposed on the substrate at a first distance below the first light-emitting chip array in the vertical direction, the third light-emitting chip array is disposed on the substrate at a second distance below the second light-emitting chip array in the vertical direction, and the first distance is larger than the second distance.
(2) The vehicular lamp according to the (1), wherein, the second light-emitting chip array comprises the second light-emitting chips by a number smaller than or equal to the number of the first light-emitting chips of the first light-emitting chip array, and the third light-emitting chip array comprises the third light-emitting chips by a number smaller than or equal to the number of the second light-emitting chips of the second light-emitting chip array.
(3) The vehicular lamp according to the (1) or (2), wherein the number of the first light-emitting chips is the same as the number of the second light-emitting chips and the number of the third light-emitting chips.
(4) The vehicular lamp according to any the (1) to (3), wherein the first light-emitting chip array, the second light-emitting chip array, and the third light-emitting chip array emit light that forms a portion of a driving-beam light distribution pattern.
(5) The vehicular lamp according to any the (1) to (4), wherein, the light source unit comprises a fourth light-emitting chip array comprising a plurality of semiconductor-type fourth light-emitting chips disposed on the substrate and arrayed along the horizontal direction, the fourth light-emitting chip array is disposed on the substrate above and apart from the first light-emitting chip array in the vertical direction, and the number of the fourth light-emitting chips is smaller than the number of the first light-emitting chips.
(6) A vehicular lamp according to the present invention comprising: a light source unit; and a lens disposed in front of the light source unit, wherein, the light source unit comprises: a substrate; a first light-emitting chip array comprising a plurality of semiconductor-type first light-emitting chips disposed on the substrate and arrayed along a horizontal direction; and a fourth light-emitting chip array comprising a plurality of semiconductor-type fourth light-emitting chips disposed on the substrate and arrayed along the horizontal direction, the fourth light-emitting chip array is disposed on the substrate above and apart from the first light-emitting chip array in a vertical direction, and the number of the fourth light-emitting chips is smaller than the number of the first light-emitting chips.
(7) The vehicular lamp according to the (5) or (6), wherein, the fourth light-emitting chip array is a portion for forming a marking light distribution pattern, and a light distribution pattern formed by light from the fourth light-emitting chip array is radiated below a light distribution pattern formed by light from the first light-emitting chip array.
(8) The vehicular lamp according to any the (5) to (7), wherein the number of the fourth light-emitting chips disposed on an inner side of a vehicle with reference to a vertical line extending through a lamp optical axis is larger than the number of the fourth light-emitting chips disposed on an outer side of the vehicle.
(9) The vehicular lamp according to any the (5) to (8), wherein, the light source unit comprises at least one upper light-emitting chip array disposed on the substrate above and apart from the fourth light-emitting chip array in the vertical direction, the upper light-emitting chip array comprises an array of upper light-emitting chips disposed on the substrate in the horizontal direction, the array of the upper light-emitting chips being the same as the fourth light-emitting chips of the fourth light-emitting chip array, and the upper light-emitting chip array is a portion for forming a marking light distribution pattern to be radiated below incident light emitted from the fourth light-emitting chip array on a screen.
(10) The vehicular lamp according to the (9), wherein the fourth light-emitting chips of the fourth light-emitting chip array and the light-emitting chips of the upper light-emitting chip array are controlled to be turned on at different timings.
(11) The vehicular lamp according to any the (1) to (10), wherein the substrate comprises a multilayer wiring board comprising multiple layers having wiring patterns stacked in a thickness direction.

### EFFECT OF THE INVENTION

According to the present invention, a vehicular lamp having functionalities more enhanced than those of the related art can be provided.

### BRIEF DESCRIPTION OF THE DRAWINGS

FIG. 1 is a plan view of a vehicle including vehicular lamps according to a first embodiment of the present invention.
FIG. 2 is a perspective view of the main components of a lamp unit according to the first embodiment of the present invention.
FIG. 3 is a plan view of a light source unit according to the first embodiment of the present invention.

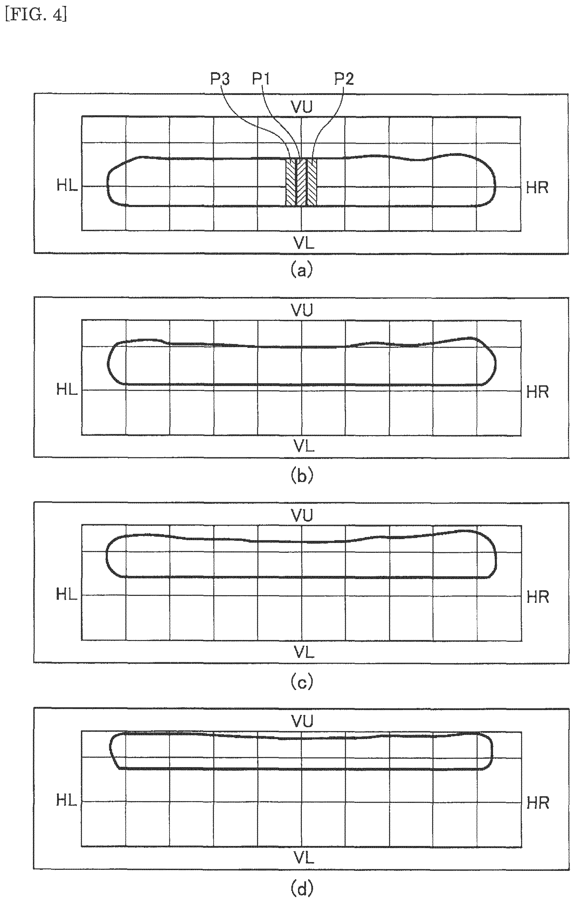

FIG. 4 illustrates light distribution patterns formed on a screen by light from each light-emitting chip array according to the first embodiment of the present invention, in which (a) illustrates a light distribution pattern on a screen when first light-emitting chips in a first light-emitting chip array are all turned on; (b) illustrates a light distribution pattern on a screen when second light-emitting chips in a second light-emitting chip array are all turned on; (c) illustrates a light distribution pattern on a screen when third light-emitting chips in a third light-emitting chip array are all turned on; and (d) illustrates a light distribution pattern on a screen when bottom light-emitting chips in a bottom light-emitting chip array are all turned on.
FIG. 5 illustrates a driving-beam light distribution pattern on a screen according to the first embodiment of the present invention.
FIG. 6 illustrates a case in which some of the light-emitting chips are turned off in response to a leading vehicle or an oncoming vehicle.
FIG. 7 illustrates the configuration of a second embodiment of the present invention.
FIG. 8 illustrates a marking light distribution pattern according to the second embodiment of the present invention.
FIG. 9 is a plan view of a light source unit according to the second embodiment of the present invention including an upper light-emitting chip array.

### MODE FOR CARRYING OUT THE INVENTION

Hereinafter, modes for carrying out the present invention (hereinafter, referred to as "embodiments") will be described in detail with reference to the accompanying drawings. Like elements throughout the entire description of the embodiments will be denoted by like numerals.

Also, unless otherwise noted, in the embodiments and drawings, "front" and "rear" indicate a "forward direction" and a "reverse direction," respectively, of the vehicle, and "upper," "lower," left," and "right" all indicate directions from the viewpoint of a driver riding in the vehicle.

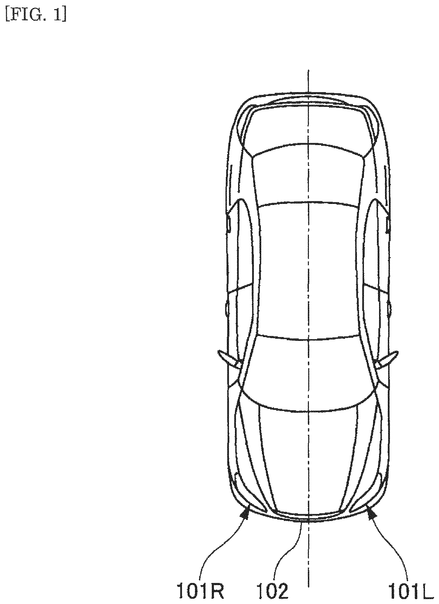

Vehicular lamps according to the embodiments of the present invention are vehicular front lights (101R, 101L) provided on the left and right sides, respectively, at the front of a vehicle 102 illustrated in FIG. 1, which will hereinafter simply be referred to as vehicular lamps. In the description below, the right and left vehicular lamps have the same configuration unless otherwise specified to have a configuration for the left vehicular lamp or the right vehicular lamp.

### (First Embodiment)

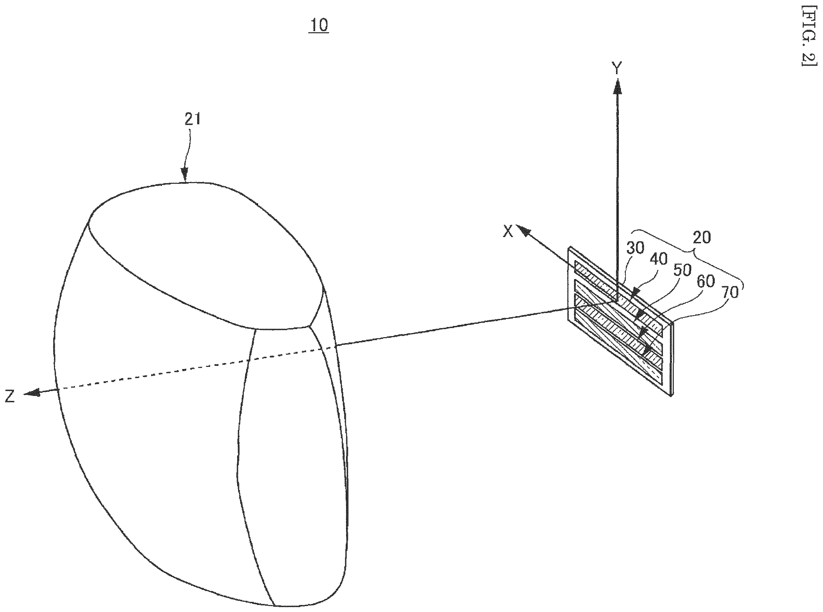

A vehicular lamp according to the first embodiment includes a housing (not illustrated) open to the front of the vehicle and an outer lens (not illustrated) attached to the housing so as to cover the opening. A lamp unit 10 (see FIG. 2) is disposed in a lamp chamber defined by the housing and the outer lens.

FIG. 2 is a perspective view illustrating the main components of the lamp unit 10. As in the subsequent drawings, an X axis indicates the horizontal direction of the vehicle 102, a Y axis indicates the vertical direction of the vehicle 102, and a Z axis indicates a lamp optical axis of a lamp unit.

As illustrated in FIG. 2, the lamp unit 10 includes a light source unit 20 and a lens 21 disposed in front of the light source unit 20. Note that the light source unit 20 is disposed on a heat sink, and the lens 21 is also attached to the heat sink via a lens holder. Thus, although FIG. 2 illustrates only the lens 21, which is the part that performs light distribution control, the vehicular lamp includes, for example, a lens member to be held by the lens holder, the lens member having flanges formed at the two ends thereof in the horizontal direction (the X axis direction) of the lens 21.

Note that the positions at which the flanges are provided are not limited to the two ends in the horizontal direction (the X axis direction). The lens 21 may be attached to the lens holder through any method, such as fixing a circumferential end face of the lens 21 to the lens holder with an adhesive agent, the method not being particularly limited.

### (Lens)

The lens 21 has a rectangular shape in front view and is composed of, for example, an acrylic resin, such as PMMA, transparent resin, such as polycarbonate (PC) or polycyclohexylenedimethylene terephthalate (PCT), or glass. Note that, from the viewpoint of processability, the lens 21 is desirably made of transparent resin. Among resins, acrylic resin having low wavelength dependency of the refractive index and capable of reducing the influence of spectroscopy is desirably used.

As described below, the light source unit 20 according to this embodiment includes many light-emitting chips. Thus, for example, when the distance between the lens 21 and the light source unit 20 is small, the temperature of the lens 21 may become high. When the temperature of the lens 21 becomes high in this way, it is preferred that the lens 21 be composed of a material having satisfactory heat resistance, such as polycarbonate (PC) or glass.

### (Light Source Unit)

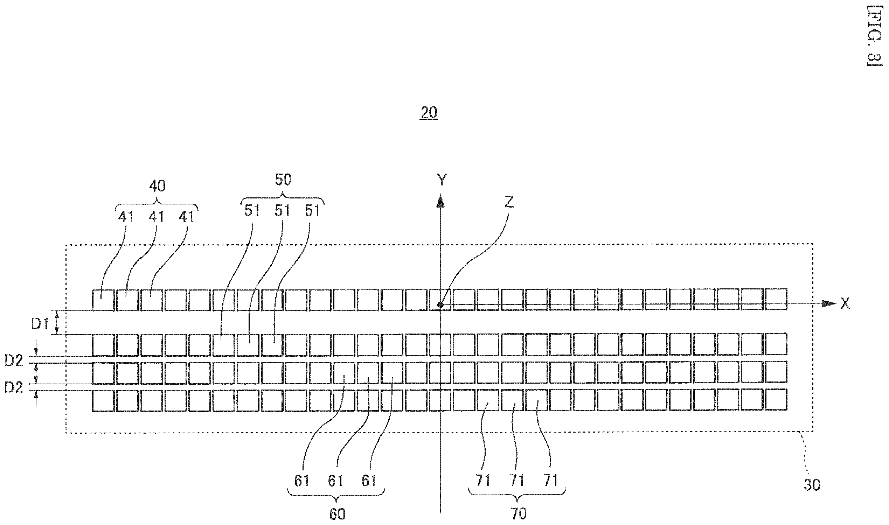

FIG. 3 is a plan view of the light source unit 20. Note that FIG. 3 is a plan view of the light source unit 20 from the rear side of the vehicle, indicating the external shape of a substrate 30 by dotted lines and mainly illustrating light-emitting chips disposed on the substrate 30.

With reference to FIG. 3, the light source unit 20 includes a substrate 30, a first light-emitting chip array 40 including many semiconductor-type first light-emitting chips 41 disposed along the horizontal direction (the X axis direction) on the substrate 30, a second light-emitting chip array 50 including many semiconductor-type second light-emitting chips 51 disposed along the horizontal direction (the X axis direction) on the substrate 30, and a third light-emitting chip array 60 including many semiconductor-type third light-emitting chips 61 disposed along the horizontal direction (the X axis direction) on the substrate 30.

This embodiment further includes a bottom light-emitting chip array 70 including many semiconductor-type bottom light-emitting chips 71 disposed along a horizontal direction on the substrate 30.

Note that, in this embodiment, the first light-emitting chips 41, the second light-emitting chips 51, the third light-emitting chips 61, and the bottom light-emitting chips 71 are LED chips. Alternatively, they may be semiconductor-type light-emitting chips, such as LD chips.

### (Substrate)

With reference to FIG. 3, many light-emitting chips are densely arranged on the substrate 30. Thus, it is preferred that the substrate 30 be a multilayer wiring board, not a monolayer circuit board, including multiple layers having wiring patterns stacked in the thickness direction, so that many light-emitting chips can be densely arranged.

For example, a buildup board can be desirably used as the substrate 30, the buildup board including multiple layers having wiring patterns stacked in the thickness direction by alternately forming circuits and substrates on a first substrate on which a first circuit is formed.

### (Light-emitting Chip Array)

FIG. 4 illustrates light distribution patterns formed on a screen by light from each light-emitting chip array (the first light-emitting chip array 40, the second light-emitting chip array 50, the third light-emitting chip array 60, and the bottom light-emitting chip array 70).

FIG. 4(a) illustrates the light distribution pattern formed on a screen when the first light-emitting chips 41 in the first light-emitting chip array 40 are all turned on; FIG. 4(b) illustrates the light distribution pattern formed on a screen when the second light-emitting chips 51 in the second light-emitting chip array 50 are all turned on; FIG. 4(c) illustrates the light distribution pattern formed on a screen when the third light-emitting chips 61 in the third light-emitting chip array 60 are all turned on; and FIG. 4(d) illustrates the light distribution pattern formed on a screen when the bottom light-emitting chips 71 in the bottom light-emitting chip array 70 are all turned on.

Note that, in FIG. 4, a VU-VL line indicates a vertical reference line on the screen, and an HL-HR line indicates a horizontal reference line on the screen. Similarly, in the subsequent drawings illustrating light distribution patterns on the screen, the VU-VL line indicates a vertical reference line on the screen, and the HL-HR line indicates the horizontal reference line on the screen.

As illustrated in FIG. 3, the first light-emitting chip array 40 is disposed on the substrate 30 such that the center of the first light-emitting chip array 40 in the horizontal direction (the X axis direction) is positioned on or near the lamp optical axis (see the Z axis). Note that the first light-emitting chip array 40 is disposed on the substrate 30 on or near the lamp optical axis (see the Z axis) in view of the vertical direction (the Y axis direction).

More specifically, the first light-emitting chip 41 positioned at the center of the first light-emitting chip array 40 in the horizontal direction (the X axis direction) is disposed on or near the lamp optical axis (see the Z axis) on the substrate 30. With reference to the first light-emitting chip 41 at the center, 14 first light-emitting chips 41 are disposed at a constant pitch along the horizontal direction (the X axis direction) toward the left and right, respectively.

That is, the first light-emitting chip array 40 consists of a total of 29 first light-emitting chips 41. Note that, with reference to the first light-emitting chip 41 positioned on or near the lamp optical axis (see the Z axis) of the first light-emitting chip array 40, the first light-emitting chips 41 may be disposed along the horizontal direction toward the left and right, respectively, in different numbers. When all of the first light-emitting chips 41 of the first light-emitting chip array 40 are turned on, a light distribution pattern is formed that is substantially symmetrical about the vertical reference line (the VU-VL line) in the horizontal direction and extending across the horizontal reference line (the HL-HR line) in the vertical direction, as illustrated in FIG. 4(a).

Note that the light distribution pattern illustrated in FIG. 4(a) is formed by the individual light distribution patterns formed by the light from the corresponding first light-emitting chips 41 overlapping in the horizontal direction with the light distribution patterns adjacent to each other.

Describing this in more detail, the individual light distribution pattern (see region P1) formed by the light from a first light-emitting chip 41 positioned at the center of the first light-emitting chip array 40 in the horizontal direction is disposed on the vertical reference line (the VU-VL line); the individual light distribution pattern (see region P2) formed by the light from a first light-emitting chip 41 immediately on the left of the first light-emitting chip 41 disposed at the center in the horizontal direction is positioned on the right of the vertical reference line (the VU-VL line) in the horizontal direction while overlapping the right-side portion of the light distribution pattern (see region P1) disposed on the vertical reference line (the VU-VL line).

The individual light distribution pattern (see region P3) formed by the light from a first light-emitting chip 41 immediately on the right of the first light-emitting chip 41 disposed at the center in the horizontal direction is disposed on the left of the vertical reference line (the VU-VL line) in the horizontal direction while overlapping the left-side portion of the light distribution pattern (see region P1) disposed on the vertical reference line (the VU-VL line). Note that, in FIG. 4(a), only the regions of the individual light distribution patterns formed by the light from the three first light-emitting chips 41 disposed at and near the center in the horizontal direction are indicated as a region PI, a region P2, and a region P3. Similarly, individual light distribution patterns formed by the light from other first light-emitting chips 41 disposed on the outer left and right sides the first light-emitting chips 41 disposed at and near the center reside adjacent to each other such that the individual light distribution patterns overlap with each other.

That is, the light from the first light-emitting chip 41 residing farthest right in the horizontal direction forms the farthest left portion of the light distribution pattern in the horizontal direction, and the light from the first light-emitting chip 41 residing farthest left in the horizontal direction forms the farthest right portion of the light distribution pattern in the horizontal direction. Thus, emission of light to a leading vehicle or an oncoming vehicle can be avoided by turning off the first light-emitting chips 41 corresponding to the position of the leading vehicle or the oncoming vehicle in the horizontal direction, thereby suppressing the generation of glare light.

The second light-emitting chip array 50 is disposed on the substrate 30 such that the center of the second light-emitting chip array 50 in the horizontal direction (the X axis direction) is positioned on or near the vertical line (see the Y axis) extending through the lamp optical axis (see the Z axis) is disposed at a first distance D1 vertically downward from the first light-emitting chip array 40, as illustrated in FIG. 3.

The second light-emitting chip array 50 is also disposed on the substrate 30 such that the second light-emitting chip 51 at the center of the second light-emitting chip array 50 in the horizontal direction (the X axis direction) is positioned on or near the vertical line (see the Y axis) extending through the lamp optical axis (see the Z axis). With reference to the second light-emitting chip 51 disposed at the center, 14 second light-emitting chips 51 are disposed at a constant pitch along the horizontal direction (the X axis direction) toward the left and right, respectively.

That is, the second light-emitting chip array 50 also consists of a total of 29 second light-emitting chips 51, like the first light-emitting chip array 40. Note that, with reference to the second light-emitting chip 51 positioned on or near the vertical line (see the Y axis) extending through the lamp optical axis (see the Z axis) of the second light-emitting chip array 50, different numbers of the second light-emitting chips 51 may be disposed on the left and right sides in the horizontal direction, and/or the number of the second light-emitting chips 51 may be smaller than the number of the first light-emitting chips 41.

When all of the second light-emitting chips 51 of the second light-emitting chip array 50 are turned on, like the first light-emitting chip array 40, a light distribution pattern is formed that is substantially symmetrical in the horizontal direction about the vertical reference line (the VU-VL line), as illustrated in FIG. 4(b). Since the second light-emitting chip array 50 is disposed at a large first distance D1 (for example, approximately 0.94 mm) vertically downward from the first light-emitting chip array 40, the lower edge of the light distribution pattern is positioned above the horizontal reference line (the HL-HR line).

Note that, like the first light-emitting chip array 40, in the light distribution pattern illustrated in FIG. 4(b), the individual light distribution patterns formed by the light from the second light-emitting chips 51 overlap the adjacent light distribution patterns in the horizontal direction. Thus, emission of light to a leading vehicle or an oncoming vehicle can be avoided by turning off the second light-emitting chips 51 corresponding to the position of the leading vehicle or the oncoming vehicle in the horizontal direction, thereby suppressing the generation of glare light.

Furthermore, the third light-emitting chip array 60 is disposed on the substrate 30 such that the center of the third light-emitting chip array 60 in the horizontal direction (the X axis direction) is positioned on or near the vertical line (see the Y axis) extending through the lamp optical axis (see the Z axis) and is disposed at a second distance D2 vertically downward from the second light-emitting chip array 50, as illustrated in FIG. 3.

The third light-emitting chip array 60 is also disposed on the substrate 30 such that the third light-emitting chip 61 at the center of the third light-emitting chip array 60 in the horizontal direction (the X axis direction) is positioned on or near the vertical line (see the Y axis) extending through the lamp optical axis (see the Z axis). With reference to the third light-emitting chip 61 disposed at the center, 14 third light-emitting chips 61 are disposed at a constant pitch along the horizontal direction (the X axis direction) toward the left and right, respectively.

That is, the third light-emitting chip array 60 also consists of a total of 29 third light-emitting chips 61, like the first light-emitting chip array 40 and the second light-emitting chip array 50. Note that, with reference to the third light-emitting chips 61 disposed on or near the vertical line (see the Y axis) extending through the lamp optical axis (see the Z axis) of the third light-emitting chip array 60, different numbers of the third light-emitting chips 61 may be disposed on the left and right sides in the horizontal direction, and/or the number of the third light-emitting chips 61 may be smaller than the number of the second light-emitting chips 51.

When all of the third light-emitting chips 61 of the third light-emitting chip array 60 are turned on, like the first light-emitting chip array 40 and the second light-emitting chip array 50, a light distribution pattern is formed that is substantially symmetrical in the horizontal direction about the vertical reference line (the VU-VL line), as illustrated in FIG. 4(c). Since the third light-emitting chip array 60 is disposed only at a small second distance D2 (for example, approximately 0.24 mm) vertically downward from the second light-emitting chip array 50, the lower edge of the light distribution pattern is positioned slightly vertically above the light distribution pattern (see FIG. 4(b)) formed by the light from the second light-emitting chip array 50.

Note that, like the first light-emitting chip array 40 and the second light-emitting chip array 50, in the light distribution pattern illustrated in FIG. 4(c), the individual light distribution patterns formed by the light from the third light-emitting chips 61 overlap the adjacent light distribution patterns in the horizontal direction. Thus, emission of light to a leading vehicle or an oncoming vehicle can be avoided by turning off the third light-emitting chips 61 corresponding to the position of the leading vehicle or the oncoming vehicle in the horizontal direction, thereby suppressing the generation of glare light.

Here, the main light that acts as glare light to a leading vehicle or an oncoming vehicle is incident on the screen vertically above the horizontal reference line (the HL-HR line). The closer the leading vehicle or the oncoming vehicle is, the higher the position of the roof of the leading vehicle or the oncoming vehicle is on the vertically upward side of the screen.

In this embodiment, the positions of the lower edges of the light distribution patterns having lower edges disposed vertically above the horizontal reference line (the HL-HR line) on the screen slightly differ in the vertical direction. Thus, the light-emitting chips corresponding to the light distribution patterns having lower edges disposed vertically above the roof of the leading vehicle or the oncoming vehicle remain turned on, whereas the light-emitting chips corresponding to the light distribution patterns having lower edges disposed below the roof of the leading vehicle or the oncoming vehicle are turned off, thereby suppressing glare light emitted to the leading vehicle or the oncoming vehicle.

Similarly, the bottom light-emitting chip array 70 is also disposed on the substrate 30 such that the center of the bottom light-emitting chip array 70 in the horizontal direction (the X axis direction) is positioned on or near the vertical line (see the Y axis) extending through the lamp optical axis (see the Z axis) and is disposed at a second distance D2 vertically downward from the third light-emitting chip array 60, as illustrated in FIG. 3.

Thus, when all of the bottom light-emitting chips 71 of the bottom light-emitting chip array 70 are turned on, the light distribution pattern is substantially symmetrical in the horizontal direction about the vertical reference line (the VU-VL line), like the first light-emitting chip array 40, the second light-emitting chip array 50, and the third light-emitting chip array 60, as illustrated in FIG. 4(d). Since the bottom light-emitting chip array 70 is disposed only at a small second distance D2 (for example, approximately 0.24 mm) vertically downward from the third light-emitting chip array 60, the lower edge of the light distribution pattern is positioned only slightly vertically above the lower edge of the light distribution pattern (see FIG. 4(c)) formed by the light from the third light-emitting chip array 60.

This allows fine control in accordance with the distance to the leading vehicle or the oncoming vehicle, as described in relation to the third light-emitting chip array 60.

Note that the bottom light-emitting chip array 70 is also disposed on the substrate 30 such that the bottom light-emitting chip 71 at the center of the bottom light-emitting chip array 70 in the horizontal direction (the X axis direction) is positioned on or near the vertical line (see the Y axis) extending through the lamp optical axis (see the Z axis). With reference to the bottom light-emitting chip 71 disposed at the center, 14 bottom light-emitting chips 71 are disposed at a constant pitch along the horizontal direction (the X axis direction) to the left and right, respectively, and a total of 29 bottom light-emitting chips 71 are provided. However, with reference to the bottom light-emitting chip 71 disposed on or near the vertical line (see the Y axis) extending through the lamp optical axis (see the Z axis) of the bottom light-emitting chip array 70, different numbers of the bottom light-emitting chips 71 may be disposed on the left and right sides in the horizontal direction, and/or the number of the bottom light-emitting chips 71 may be smaller than the number of the third light-emitting chips 61.

It is preferred that a driving-beam light distribution pattern formed by multiplexing light distribution patterns (see FIG. 4) formed of light from corresponding light-emitting chip arrays (the first light-emitting chip array 40, the second light-emitting chip array 50, the third light-emitting chip array 60, and the bottom light-emitting chip array 70) has luminosity that smoothly attenuates in the vertically upward direction.

Thus, it is desirable to set the luminescence of the second light-emitting chips 51 of the second light-emitting chip array 50 lower than the luminescence of the first light-emitting chips 41 of the first light-emitting chip array 40, the luminescence of the third light-emitting chips 61 of the third light-emitting chip array 60 lower than the luminescence of the second light-emitting chips 51 of the second light-emitting chip array 50, and the luminescence of the bottom light-emitting chips 71 of the bottom light-emitting chip array 70 lower than the luminescence of the third light-emitting chips 61 of the third light-emitting chip array 60.

For example, it is preferred that the electrical power supplied to the second light-emitting chips 51, the third light-emitting chips 61, and the bottom light-emitting chips 71 be reduced in order, such that, when the luminescence (output) of the first light-emitting chips 41 is set to 100%, the luminescence (output) of the second light-emitting chips 51 is set to approximately 50%, the luminescence (output) of the third light-emitting chips 61 is set to approximately 35%, and the luminescence (output) of the bottom light-emitting chips 71 is set to approximately 20%.

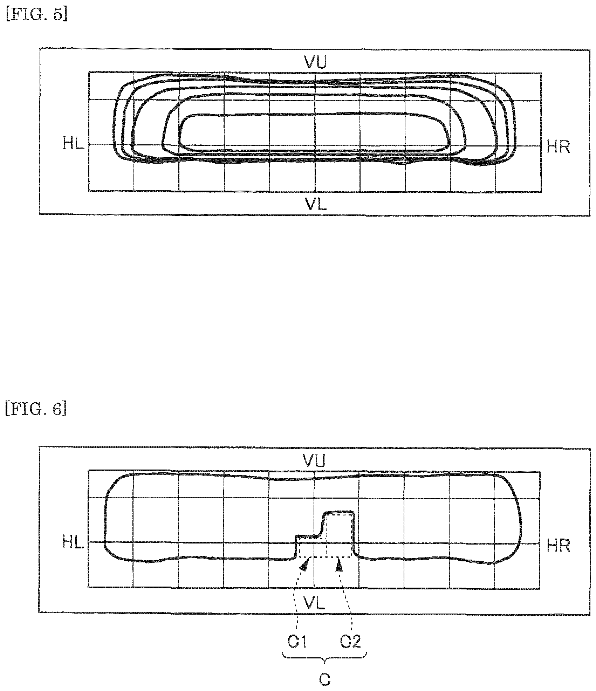

FIG. 5 illustrates a driving-beam light distribution pattern according to this embodiment on a screen, the driving-beam light distribution pattern being formed by multiplexing the light distribution patterns illustrated in FIG. 4. Note that the light distribution patterns are indicated by equal luminosity lines in FIG. 5.

As described above, the light-emitting chips (the first light-emitting chips 41, the second light-emitting chips 51, the third light-emitting chips 61, and the bottom light-emitting chips 71) are in the same arrangement in the horizontal direction in the corresponding light-emitting chip arrays (the first light-emitting chip array 40, the second light-emitting chip array 50, the third light-emitting chip array 60, and the bottom light-emitting chip array 70). Thus, the widths of the light distribution patterns in the horizontal direction are substantially the same, as illustrated in FIG. 4.

Also, as described above, the positions of the light distribution patterns on the screen are varied in the vertical direction to appropriately control the positions of the lower edges of the light distribution patterns. Thus, the driving-beam light distribution pattern formed by the multiplexing the light distribution patterns illustrated in FIG. 4 has a rectangular shape that is wide in the horizontal and vertical directions, as illustrated in FIG. 5, and achieves a satisfactory driving-beam light distribution pattern having the highest luminescence at the center.

FIG. 6 illustrates a case in which some of the light-emitting chips are turned off to respond to a leading vehicle or an oncoming vehicle. According to this embodiment, light distribution can be controlled to prevent a region C corresponding to a leading vehicle or an oncoming vehicle from being irradiated with light, as illustrated in FIG. 6, because light-emitting chip arrays are disposed in other rows in the vertical direction.

In specific, the region C includes a small substantially rectangular segment C1 on the left side in the horizontal direction and a large substantially rectangular segment C2 adjoining the right side of the small substantially rectangular segment C1 in the horizontal direction. The small substantially rectangular segment C1 corresponds to a leading vehicle approximately 100 m ahead and is not irradiated with light. The large substantially rectangular segment C2 corresponds to an oncoming vehicle approximately 50 m ahead and is not irradiated with light.

In this way, light can be emitted above a leading vehicle or an oncoming vehicle in the vertical direction while the leading vehicle or the oncoming vehicle is prevented from being irradiated with light. This allows suppression of glare light emitted to the leading vehicle or the oncoming vehicle while achieving control of a driving-beam light distribution pattern having good visibility.

In particular, in this embodiment, the use of a multilayer wiring board as the substrate 30 prevents the intervals of the light-emitting chips from being limited due to wiring provided on the substrate 30, thereby achieving a distance (width of gaps) between light-emitting chips adjacent to each other in the horizontal direction of 0.2 mm or less (in specific, approximately 0.1 mm). Thus, the intervals of turning off the driving-beam light distribution pattern in the horizontal direction can be finely controlled, thereby achieving high controllability.

### (Second Embodiment)

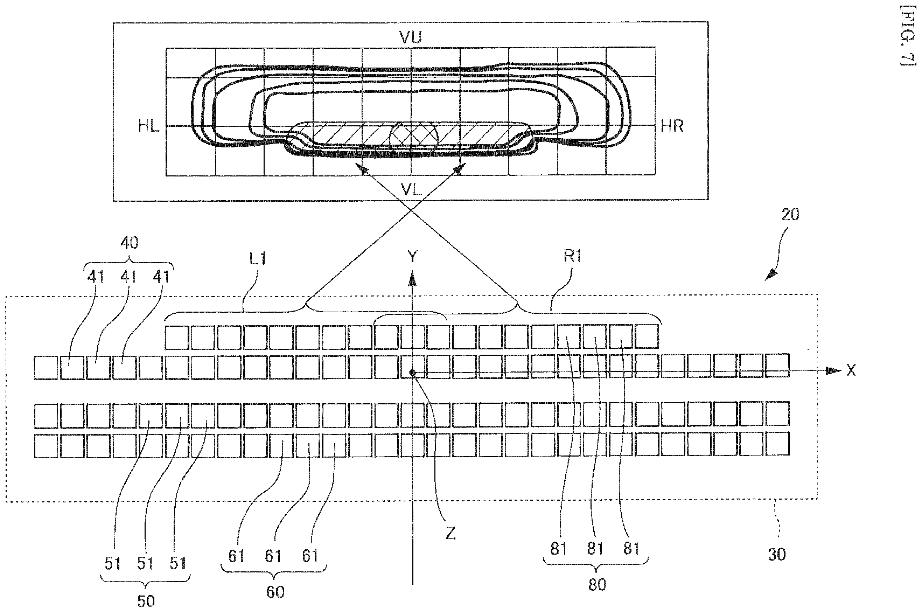

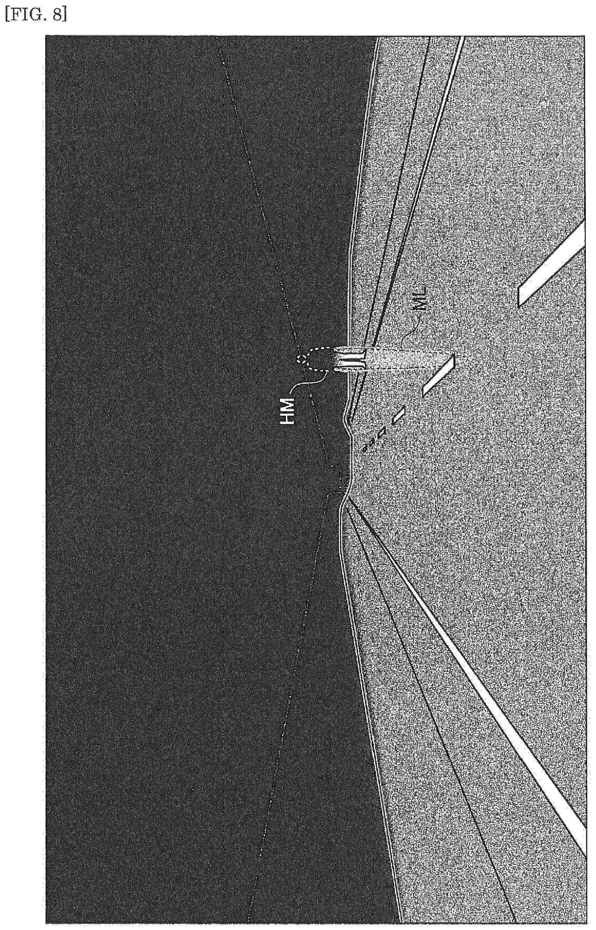

A vehicular lamp according to a second embodiment of the present invention will now be described with reference to FIGs. 7 and 8. The basic configuration of the second embodiment is the same as that of the first embodiment. Thus, descriptions of the components that differ from those of the first embodiment will be mainly provided, and descriptions of similar components may be omitted.

FIG. 7 illustrates the configuration of the second embodiment of the present invention. The bottom portion of FIG. 7 corresponds to FIG. 3, and the top portion of FIG. 7 corresponds to FIG. 5. As illustrated in FIG. 7, also in the second embodiment, a light source unit 20 includes a first light-emitting chip array 40, a second light-emitting chip array 50, and a third light-emitting chip array 60. Furthermore, the positional relation of the first light-emitting chip array 40, the second light-emitting chip array 50, and the third light-emitting chip array 60 on the substrate 30 (the positional relation in the horizontal direction (see the X axis) and the vertical direction (see the Y axis)) is also the same as that of the first embodiment.

Note that the arrangement of first light-emitting chips 41 in the first light-emitting chip array 40, second light-emitting chips 51 in the second light-emitting chip array 50, and third light-emitting chips 61 in the third light-emitting chip array 60 is also the same as that of the first embodiment.

Furthermore, the use of a multilayer wiring board, such as a buildup board, as a substrate 30 is the same as that of the first embodiment.

In contrast, in the second embodiment, the bottom light-emitting chip array 70 according to the first embodiment is replaced with a fourth light-emitting chip array 80 including many semiconductor-type fourth light-emitting chips 81 arrayed along the horizontal direction on a substrate 30 of a light source unit 20.

Note that LED chips are used as the fourth light-emitting chips 81, as in the first embodiment, but alternatively, semiconductor-type light-emitting chips, such as LD chips, may be used.

The fourth light-emitting chip array 80 is disposed on the substrate 30 such that the center of the fourth light-emitting chip array 80 in the horizontal direction (the X axis direction) is positioned on or near the vertical line (see the Y axis) extending through the lamp optical axis (see the Z axis), and the fourth light-emitting chip 81 disposed at the center of the fourth light-emitting chip array 80 in the horizontal direction (the X axis direction) is positioned on or near the vertical line (see the Y axis) extending through the lamp optical axis (see the Z axis), as illustrated in FIG. 7.

Furthermore, also in the fourth light-emitting chip array 80, the fourth light-emitting chip 81 are disposed at a constant pitch along the horizontal direction (the X axis direction) and in the same number on the left and right sides (in the horizontal direction) with reference to the fourth light-emitting chip 81 disposed at the center of the fourth light-emitting chip array 80 in the horizontal direction (the X axis direction). The number of the fourth light-emitting chip 81 is smaller than that of the first light-emitting chips 41.

However, as described below, in the fourth light-emitting chip array 80, the fourth light-emitting chips 81 may not necessarily be disposed in the same number in the horizontal direction with reference to the vertical line (see the Y axis), and thus, the center of the fourth light-emitting chip array 80 in the horizontal direction (the X axis direction) is not always positioned on or near the vertical line (see the Y axis) extending through the lamp optical axis (see the Z axis).

In the second embodiment having such a configuration, when all of the light-emitting chips disposed in the light source unit 20 are turned on, the light distribution pattern such as that illustrated in FIG. 7 is formed.

In specific, as a result of the fourth light-emitting chip array 80, a portion (see the hatched portion) corresponding to light distributed below the horizontal reference line (the HL-HR line) and lower than the driving-beam light distribution pattern according to the first embodiment (see FIG. 5) is formed close to the vertical line (the VU-VL line).

The light distributed in the lower portion in this way can form a marking light distribution pattern ML (see FIG. 8) that indicates the presence of a pedestrian HM to the driver, as described below. Note that the marking light distribution pattern ML (see FIG. 8) is not only used to indicate the presence of a pedestrian to the driver but may also be used to indicate the presence of the vehicle to the pedestrian.

FIG. 8 illustrates a marking light distribution pattern ML. FIG. 8 illustrates a state in which a vehicle is driving with low beam lamps that are provided in the vehicular lamps as separated units turned on and presumes a state in which a pedestrian HM is walking along a side walk in front and on the right side of the vehicle.

That is, most of the light-emitting chips of the light source unit 20 are turned off. In such a state, when a detection device (for example, a motion sensor) installed in the vehicle detects the pedestrian HM, the fourth light-emitting chips 81 that can emit light onto or near the detected position among the fourth light-emitting chips 81 of the fourth light-emitting chip array 80 are turned on to form a marking light distribution pattern ML, as illustrated in FIG. 8.

The marking light distribution pattern ML is formed by the vehicular lamp closer to the pedestrian HM among the left and right vehicular lamps. Describing this in more detail, in FIG. 8, the marking light distribution pattern ML is formed by the right vehicular lamp because the pedestrian HM is present on the side walk adjacent to the oncoming lane.

FIG. 7 illustrates a relation in which when the light from the fourth light-emitting chips 81 disposed on the right side in the horizontal direction with reference to the vertical reference line (see the Y axis) extending through the lamp optical axis (see the Z axis) among the fourth light-emitting chips 81 of the fourth light-emitting chip array 80 passes through the lens 21 (see FIG. 2), the light is incident on the screen on the left side in the horizontal direction of the vertical reference line (the VU-VL line), and when the light from the fourth light-emitting chips 81 positioned on the left side in the horizontal direction with reference to the vertical reference line (see the Y axis) extending through the lamp optical axis (see the Z axis) passes through the lens 21 (see FIG. 2), the light is incident on the screen on the right side in the horizontal direction of the vertical reference line (the VU-VL line).

However, in the example illustrated in FIG. 8, the pedestrian HM resides on the right side in the horizontal direction. Thus, the appropriate fourth light-emitting chips 81 on the left side in the horizontal direction with reference to the vertical line (see the Y axis) extending through the lamp optical axis (see the Z axis) among the fourth light-emitting chips 81 of the fourth light-emitting chip array 80 of the right vehicular lamp are turned on to form the marking light distribution pattern ML.

By forming such a marking light distribution pattern ML, the driver can readily recognize the presence of a pedestrian, and in contrast, the pedestrian can recognize the presence of the vehicle through the emitted light.

However, when a pedestrian HM is on the right side in the horizontal direction, a marking light distribution pattern ML is emitted from the right vehicular lamp, and when a pedestrian HM is on the left side in the horizontal direction, a marking light distribution pattern ML is emitted from the left vehicular lamp. Thus, in the case where the light source units 20 are designed individually for the left and right vehicular lamps, the fourth light-emitting chips 81 of the fourth light-emitting chip array 80 do not have to be disposed symmetrically about the vertical line (see the Y axis) extending through the lamp optical axis (see the Z axis), as illustrated in FIG. 7.

That is, to provide standardized light source units 20 for the left and right vehicular lamps, the light source units 20 each may include the fourth light-emitting chip array 80 illustrated in FIG. 7. To provide light source units 20 having different designs for the left and right vehicular lamps, the light source units 20 may be configured as described below.

As also described above, when a pedestrian is on the right side in the horizontal direction, a marking light distribution pattern ML is formed by the right vehicular lamp. The fourth light-emitting chips 81 that emit light in the corresponding direction are the fourth light-emitting chips 81 positioned on the left side in the horizontal direction with reference to the vertical line (see the Y axis) extending through the lamp optical axis (see the Z axis) among the fourth light-emitting chips 81 of the fourth light-emitting chip array 80 illustrated in FIG. 7.

Note that the left side in the horizontal direction of the vehicular lamp on the right side of the vehicle is the inner side of the vehicle.

However, the vehicular lamps are offset to the left and right relative to the center of the vehicle. Thus, when a pedestrian is in front of the center of the vehicle, the vehicular lamp should be able to emit a marking light distribution pattern ML toward the center.

Thus, the fourth light-emitting chips 81 of the fourth light-emitting chip array 80 to be provided on the light source unit 20 of the right vehicular lamp should be the fourth light-emitting chips 81 disposed in the range L1 in FIG. 7, i.e., the fourth light-emitting chip 81 on the immediate right in the horizontal direction (the X axis direction) of the vertical line (see the Y axis) extending through the lamp optical axis (see the Z axis) and all the fourth light-emitting chips 81 arrayed to the left therefrom.

However, in some cases, the fourth light-emitting chips 81 may include the fourth light-emitting chip 81 on the second right in the horizontal direction of the vertical line (see the Y axis) extending through the lamp optical axis (see the Z axis) and all the fourth light-emitting chips 81 arrayed to the left therefrom.

In such a case also, a larger number of fourth light-emitting chips 81 can be disposed on the left side (i.e., the inner side of the vehicle) of the vertical line (see the Y axis) extending through the lamp optical axis (see the Z axis) in the horizontal direction than on the right side in the horizontal direction, to provide a light source unit 20 for the right vehicular lamp.

Similarly, a larger number of fourth light-emitting chips 81 can be disposed on the right side of the vertical line (see the Y axis) extending through the lamp optical axis (see the Z axis) in the horizontal direction than on the left side in the horizontal direction, to provide a light source unit 20 for the left vehicular lamp (for example, see the fourth light-emitting chips 81 in the range R1 in FIG. 7). Note that the right side in the horizontal direction of the vehicular lamp on the left side of the vehicle is the inner side of the vehicle.

Thus, the left and right vehicular lamps, which include the fourth light-emitting chips 81 by different numbers on the left and right sides of the vertical line (see the Y axis) extending through the lamp optical axis (see the Z axis) in the horizontal direction, should each have a larger number of fourth light-emitting chips 81 on the inner side of the vehicle than the outer side of the vehicle relative to the vertical line (see the Y axis) extending through the lamp optical axis (see the Z axis).

It is preferred that the marking light distribution pattern ML, which is emitted toward a pedestrian HM, a bicycle, a motorcycle, etc., does not act as glare light. Thus, the fourth light-emitting chip array 80 desirably emits light to the screen in a region below the horizontal reference line (the HL-HR line) (more desirably, a region on or below the horizontal reference line (the HL-HR line) on the screen).

In specific, it is preferred that when light from the fourth light-emitting chip array 80 passes through the lens 21 (see FIG. 2), the light from the fourth light-emitting chips 81 emitted such that the center in the vertical direction of the light distribution pattern formed by the light from the fourth light-emitting chip array 80 (the center of the vertical width of the light distribution pattern) is disposed below the horizontal reference line (the HL-HR line) on the screen. That is, it is desirable that the fourth light-emitting chip array 80 be disposed on the upper side of the substrate 30 in the vertical direction so that light can be emitted to the upper side of the lens 21 in the vertical direction and thereby emitted below the horizontal reference line (the HL-HR line) on the screen.

In the above-described examples, the only light-emitting chip array that forms a marking light distribution pattern ML is the fourth light-emitting chip array 80. Additional light-emitting chip arrays may be provided to form further marking light distribution patterns ML.

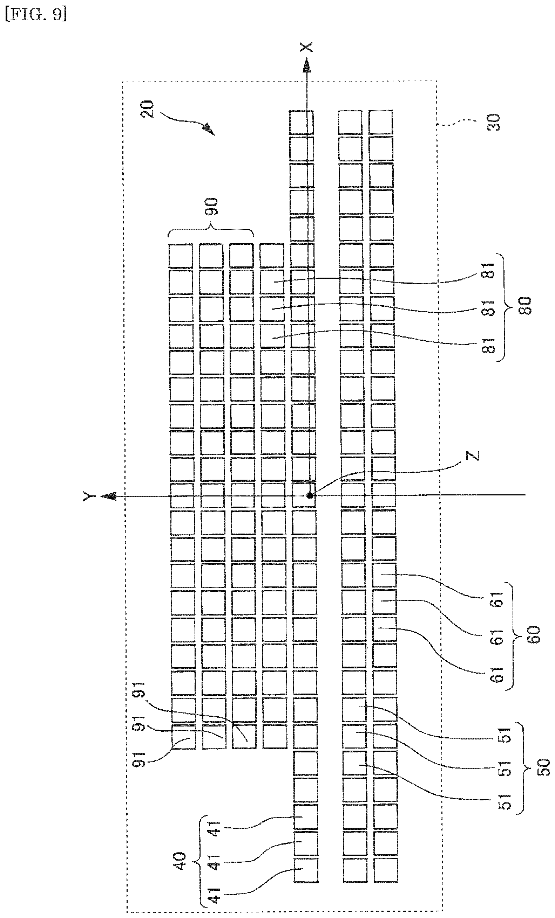

In specific, the light source unit 20 may include at least one upper light-emitting chip array 90 (see FIG. 9) disposed above and apart from the fourth light-emitting chip array 80 in the vertical direction on the substrate 30.

In such a case, the further provided upper light-emitting chip array 90 may include upper light-emitting chips 91 having the same arrangement in the horizontal direction (the X axis direction) on the substrate 30 as that of the fourth light-emitting chips 81 of the fourth light-emitting chip array 80. That is, a fourth light-emitting chip array identical to the fourth light-emitting chip array 80 may be further provided above the fourth light-emitting chip array 80 in the vertical direction.

FIG. 9 is a plan view of a light source unit 20 according to the second embodiment including an upper light-emitting chip array 90. As illustrated in FIG. 9, for example, three upper light-emitting chip arrays 90 having the same configuration as that of the fourth light-emitting chip array 80 may disposed on the upper side in the vertical direction, and the curvature of the incident face or the emission face of the lens 21 may be slightly adjusted. Then, the upper light-emitting chips 91 of the upper light-emitting chip arrays 90 can be turned on at different timings in sequence from the uppermost ones such that after the upper light-emitting chips 91 adjacent to the fourth light-emitting chip array 80 are turned on, the fourth light-emitting chips 81 of the fourth light-emitting chip array 80 are finally turned on. In this way, spots of light can be shifted from the vehicle to approach the pedestrian. This dynamic movement of the light enables even more ready recognition of the pedestrian by the driver.

Note that the dynamic movement of light also enables even more ready recognition of the vehicle by the pedestrian.

Although the present invention has been described based on specific embodiments, the present invention is not limited to above embodiment. For example, when the driving-beam light distribution pattern is formed in the second embodiment, the fourth light-emitting chips 81 of the fourth light-emitting chip array 80 may be turned off while the light-emitting chips (the first light-emitting chips 41, the second light-emitting chips 51, and the third light-emitting chips 61) of the first light-emitting chip array 40, the second light-emitting chip array 50, and the third light-emitting chip array 60 may be turned on.

Furthermore, in the second embodiment, a bottom light-emitting chip array 70 may be further provided below the third light-emitting chip array 60 in the vertical direction, as in the first embodiment.

Furthermore, in the second embodiment, the second light-emitting chip array 50 and the third light-emitting chip array 60 may be omitted, and the light source unit 20 may include merely the first light-emitting chip array 40 and the fourth light-emitting chip array 80. In such a case, a driving-beam light distribution pattern may be formed only by the first light-emitting chip array 40, and a marking light distribution pattern ML may be formed by the fourth light-emitting chip array 80.

Furthermore, in the above-described embodiments, the light-emitting chips (the first light-emitting chips 41, the second light-emitting chips 51, the third light-emitting chips 61, the bottom light-emitting chips 71, the fourth light-emitting chips 81, and the upper light-emitting chips 91) in the respective light-emitting chip arrays (the first light-emitting chip array 40, the second light-emitting chip array 50, the third light-emitting chip array 60, the bottom light-emitting chip array 70, the fourth light-emitting chip array 80, and the upper light-emitting chip array 90) are arrayed in the horizontal direction at a constant pitch. Alternatively, the pitch of the light-emitting chips in the horizontal direction may differ for each light-emitting chip array or the light-emitting chips may be arrayed at different pitches in the same light-emitting chip array.

Although the present invention is not limited to above embodiment. Modifications and improvements that do not depart from the technical aspects are also included in the technical scope of the invention, and this is evident from the description of the scope of the claims for patent.

### DESCRIPTION OF REFERENCE NUMERALS

10 lamp unit
20 light source unit
21 lens
30 substrate
40 first light-emitting chip array
41 first light-emitting chip
50 second light-emitting chip array
51 second light-emitting chip
60 third light-emitting chip array
61 third light-emitting chip
61 third light-emitting chip
70 bottom light-emitting chip array
71 bottom light-emitting chip
80 fourth light-emitting chip array
81 fourth light-emitting chip
90 upper light-emitting chip array
91 upper light-emitting chip
C region
C1 small substantially rectangular segment
C2 large substantially rectangular segment
D1 first distance
D2 second distance
HM pedestrian
ML marking light distribution pattern
101L, 101R vehicular front light
102 vehicle

## Claims

1. A vehicular lamp comprising:
a light source unit; and
a lens disposed in front of the light source unit, wherein,
the light source unit comprises:
a substrate;
a first light-emitting chip array comprising a plurality of semiconductor-type first light-emitting chips disposed on the substrate and arrayed along a horizontal direction;
a second light-emitting chip array comprising a plurality of semiconductor-type second light-emitting chips disposed on the substrate and arrayed along the horizontal direction; and
a third light-emitting chip array comprising a plurality of semiconductor-type third light-emitting chips disposed on the substrate and arrayed along the horizontal direction,
the second light-emitting chip array is disposed on the substrate at a first distance below the first light-emitting chip array in the vertical direction,
the third light-emitting chip array is disposed on the substrate at a second distance below the second light-emitting chip array in the vertical direction, and
the first distance is larger than the second distance.

2. The vehicular lamp according to claim 1, wherein,
the second light-emitting chip array comprises the second light-emitting chips by a number smaller than or equal to the number of the first light-emitting chips of the first light-emitting chip array, and
the third light-emitting chip array comprises the third light-emitting chips by a number smaller than or equal to the number of the second light-emitting chips of the second light-emitting chip array.

3. The vehicular lamp according to claim 1, wherein the number of the first light-emitting chips is the same as the number of the second light-emitting chips and the number of the third light-emitting chips.

4. The vehicular lamp according to claim 1, wherein the first light-emitting chip array, the second light-emitting chip array, and the third light-emitting chip array emit light that forms a portion of a driving-beam light distribution pattern.

5. The vehicular lamp according to claim 1, wherein,
the light source unit comprises a fourth light-emitting chip array comprising a plurality of semiconductor-type fourth light-emitting chips disposed on the substrate and arrayed along the horizontal direction,
the fourth light-emitting chip array is disposed on the substrate above and apart from the first light-emitting chip array in the vertical direction, and
the number of the fourth light-emitting chips is smaller than the number of the first light-emitting chips.

6. A vehicular lamp comprising:
a light source unit; and
a lens disposed in front of the light source unit, wherein,
the light source unit comprises:
a substrate;
a first light-emitting chip array comprising a plurality of semiconductor-type first light-emitting chips disposed on the substrate and arrayed along a horizontal direction; and
a fourth light-emitting chip array comprising a plurality of semiconductor-type fourth light-emitting chips disposed on the substrate and arrayed along the horizontal direction,
the fourth light-emitting chip array is disposed on the substrate above and apart from the first light-emitting chip array in a vertical direction, and
the number of the fourth light-emitting chips is smaller than the number of the first light-emitting chips.

7. The vehicular lamp according to claim 5, wherein,
the fourth light-emitting chip array is a portion for forming a marking light distribution pattern, and
a light distribution pattern formed by light from the fourth light-emitting chip array is incident below a light distribution pattern formed by light from the first light-emitting chip array.

8. The vehicular lamp according to claim 5, wherein the number of the fourth light-emitting chips disposed on an inner side of a vehicle with reference to a vertical line extending through a lamp optical axis is larger than the number of the fourth light-emitting chips disposed on an outer side of the vehicle.

9. The vehicular lamp according to claim 5, wherein,
the light source unit comprises at least one upper light-emitting chip array disposed on the substrate above and apart from the fourth light-emitting chip array in the vertical direction,
the upper light-emitting chip array comprises an array of upper light-emitting chips disposed on the substrate in the horizontal direction, the array of the upper light-emitting chips being the same as the array of the fourth light-emitting chips of the fourth light-emitting chip array, and
the upper light-emitting chip array is a portion for forming a marking light distribution pattern incident to incident on a screen below incident light emitted from the fourth light-emitting chip array.

10. The vehicular lamp according to claim 9, wherein the fourth light-emitting chips of the fourth light-emitting chip array and the light-emitting chips of the upper light-emitting chip array are controlled to be turned on at different timings.

11. The vehicular lamp according to claim 1, wherein the substrate comprises a multilayer wiring board comprising multiple layers having wiring patterns stacked in a thickness direction.
